# EUROPÄISCHE PATENTSCHRIFT

(11) **EP 1 851 036 B1**
(45) Veröffentlichungstag und Bekanntmachung des Hinweises auf die Patenterteilung: **03.10.2012**
(21) Anmeldenummer: 06722521.9
(22) Anmeldetag: 21.02.2006
(51) Int. Cl.: B29C 65/02, B29K 105/06, B29L 12/00

(54) **Faserverbund-Bauelement und Verfahren zur Herstellung eines Faserverbund-Bauelements**
Fiber composite component and method for the production of a fiber composite component
Element composite renforce par des fibres et procede de production d'un element composite renforce par des fibres

(30) Priorität: 21.02.2005 DE 102005008252; 16.01.2006 DE 102006002198
(43) Veröffentlichungstag der Anmeldung: 07.11.2007
(73) Patentinhaber: Airbus Operations GmbH, 21129 Hamburg (DE)
(72) Erfinder: KAPS, Robert, 38108 Braunschweig (DE); SCHOPPMEIER, Jan, 30974 Wennigen (DE); HERBECK, Lars, 38173 Feldheim (DE); SCHMIDT, Daniel, 37073 Göttingen (DE); HERRMANN, Axel, 31228 Peine (DE)
(74) Vertreter: Lins, Edgar
(86) Internationale Anmeldenummer: PCT/DE2006/000337
(87) Internationale Veröffentlichungsnummer: WO 2006/089534

(56) Entgegenhaltungen:
- EP-A- 0 158 528
- EP-A- 0 159 169
- WO-A-03/092986
- US-A- 5 667 881

## Beschreibung

Die Erfindung betrifft ein Faserverbund-Bauelement mit wenigstens aneinander angrenzenden ersten und zweiten Teilelementen wobei das erste Teilelement aus einer ersten Faserstruktur und einem die erste Faserstruktur einbettenden ersten Matrixsystem und das zweite Teilelement aus einer zweiten Faserstruktur und einem die zweite Faserstruktur einbettenden zweiten Matrixsystem besteht und wobei die beiden Matrixsysteme unterschiedlich aushärten.

Die Erfindung betrifft ferner ein Verfahren zur Herstellung eines Faserverbund-Bauelements mit wenigstens aneinander angrenzenden ersten und zweiten Teilelementen, wobei das erste Teilelement aus einer ersten Faserstruktur und einem die erste Faserstruktur einbettenden ersten Matrixsystem und das zweite Teilelement aus einer zweiten Faserstruktur und einem die zweite Faserstruktur einbettenden zweiten Matrixsystem gebildet wird und die beiden Matrixsysteme unterschiedlich aushärten.

Es ist bekannt, Faserverbund-Bauelemente aus verschiedenen Teüelementen zusammenzusetzen, die unterschiedliche Faserstrukturen, insbesondere aber auch unterschiedliche Matrixsysteme aufweisen, um den unterschiedlichen Anforderungen an die Teilelemente gerecht zu werden. In herkömmlicher Technik werden die Teilelemente getrennt voneinander hergestellt und zu dem Bauelement mittels einer Kleb- und/oder Schraubverbindung zusammengefügt. Das Zusammenfügen der Teilelemente führt zu dem Nachteil, dass die Verbindung nur dann eine etwaig benötigte hohe Scherfestigkeit aufweist, wenn für die Verbindung ein hoher Aufwand getrieben wird, der das Gewicht des Faserverbund-Bauelements deutlich erhöht.

Durch DE 199 15 083 C1 und EP 1 400 341 A1 ist es bekannt, unterschiedliche Preforms, also Faserstruktur-Teilelemente zueinander anzuordnen und gemeinsam mit einem Bindemittel (Matrixsystem) zu durchtränken und - ggf. unter Vakuum -auszuhärten. Dabei werden für die Teilelemente jedoch ersichtlich gleiche Matrixsysteme verwendet.

US 5,667,881 offenbart eine Verbindung zwischen einem thermoplastischen und einem duroplastischen Kunststoff, die dadurch hergestellt wird, dass an der Grenzfläche zwischen beiden Kunststoffen diese sich im flüssigen bzw. plastifizierten Zustand etwas vermischen können, um so miteinander eine Art Dispersion zu bilden. Ein derartiges Verfahren ist auf die Verwendung miteinander mischbarer Kunststoffe beschränkt und hat daher nur einen begrenzten Anwendungsbereich.

EP 0 159 169 A2 offenbart eine Kunststoffplattenanordnung und deren Herstellung. Dabei werden fertige Kunststoffplatten, die keine Faserstrukturen aufweisen durch eine Punktverschwelßung mittels eines Laserstrahls miteinander verbunden. Die dem Laserstrahl zugewandte Platte ist für den Laserstrahl durchlässig, während die an der ersten Platte anliegende zweite Platte die Laserenergie absorbieren soll. Dadurch kommt es zu einem Aufschmelzen der unteren Platte, die aufgrund ihrer Erwärmung dann auch die obere Platte anschmilzt. Durch das Anschmelzen soll unter Einfluss der Laserenergie eine ungleichmäßige Verbindung zustande kommen. Das Material der unteren Platte kann mit Faserstückchen verstärkt sein, die beim Schmelzen der unteren Platte in dem flüssigen Material mitschwimmen. EP 0 158 528 A2 offenbart ein ähnliches Verfahren, wobei in dem Übergangsbereich zwischen den Kunststoffplatten ein Sieb oder eine mit nicht entgrateten Löchern versehene Platte eingelegt ist.

Der vorliegenden Erfindung liegt die Aufgabe zugrunde, die Herstellung eines Faserverbund-Bauelements der eingangs erwähnten Art zu ermöglichen, das eine erhöhte Stabilität der Verbindung der Teilelemente aufweist, kostengünstig herstellbar ist und nicht auf bestimmte Kunststoffkombinationen beschränkt ist.

Diese Aufgabe wird gelöst durch ein Faserverbund-Bauelement der eingangs erwähnten Art, das dadurch gekennzeichnet ist, dass sich das erste Matrixsystem mit unregelmäßigen Grenzflächen in die zweite Faserstruktur des zweiten Teilelements erstreckt und sich das zweite Matrixsystem des zweiten Tellelements mit komplementären Grenzflächen an das erste Matrixsystem des ersten Teilelements innerhalb der zweiten Faserstruktur anschließt.

In einer alternativen Ausführungsform ist ein erfindungsgemäßes Faserverbund-Bauelement der eingangs erwähnten Art dadurch gekennzeichnet, dass sich das erste Matrixsystem des ersten Teilelements mit unregelmäßigen Grenzflächen in die zweite Faserstruktur des zweiten Teilelements erstreckt und dort einen Mischbereich mit den unregelmäßigen Grenzflächen bildet und sich das zweite Matrixsystem des zweiten Teilelements innerhalb der zweiten Faserstruktur mit komplementären Grenzflächen an den Mischbereich anschließt.

Die oben erwähnte Aufgabe wird ferner in einer ersten Ausführungsform mit einem Verfahren der eingangs erwähnten Art dadurch gelöst, dass zunächst das erste Matrixsystem des ersten Teilelements (1) verflüssigt und dabei unregelmäßig in die Faserstruktur (4) des angrenzenden zweiten Teilelements (2) eindringt, das anschließend das Matrixsystem des zweiten Teilelements (2) verflüssigt wird und das die Matrixsysteme mit innerhalb der zweiten Faserstruktur (4) aneinander angrenzenden komplementären Grenzflächen ausgehärtet werden.

Das erfindungsgemäße Verfahren sieht somit vor, dass das Matrixsystem des ersten Teilelements zunächst verflüssigt wird, während die Faserstruktur des zweiten Teilelements noch trocken ist, d. h. ein etwaig bereits vorhandenes Matrixsystem des zweiten Teilelements noch nicht verflüssigt ist oder die Faserstruktur des zweiten Teilelements noch gar nicht mit einem Matrixsystem versehen worden ist. Dadurch kann das Matrixsystem des ersten Teilelements in flüssiger Form in dem Bereich des zweiten Teilelements unregelmäßig eindringen, sodass beim anschließenden Verflüssigen des Matrixsystem des zweiten Teilelements (durch Erwärmen oder durch eine Injektion des flüssigen Bindemittels) eine unregelmäßigen Grenzfläche zwischen den Matrixsystemen ausgebildet wird, durch die die ausgehärteten Matrixsysteme miteinander "verzahnt" oder "verhakt" sind. Auf diese Weise gelingt eine Verbindung zwischen den Teilelementen, die aufgrund der "Verzahnung" oder "Verhakung" der Matrixsysteme eine deutlich erhöhte Scherfesigkeit aufweist. Charakteristisch für das erfindungsgemäße Verfahren ist, dass die Verzahnung oder Verhakung der Matrixsysteme ausschließlich im Bereich eines der Teilelemente stattfindet, wobei ein "Rückfluss" in das andere Teilelement vernachlässigbar ist und weniger als 2 %, vorzugsweise weniger als 1 % des die Verzahnung oder Verhakung in dem Teilelement bewirkenden Volumens ausmacht.

In einer Ausführungsform der Erfindung weisen die Teilelemente ein Matrixsystem aus einem Duroplast und ein Matrixsystem aus einem Thermoplast auf. Dabei kann vorzugsweise der Thermoplast in der Faserstruktur des ersten Teilelements vorhanden sein, das somit als thermoplastisches Prepreg ausgebildet sein oder dessen Faserstruktur thermoplastische Fasern enthalten kann. Durch Aufheizen kann der Thermoplast verflüssigt werden und so in den Bereich des zweiten Teilelements eindringen, vorzugsweise in die Faserstruktur des zweiten Teilelements. Das duroplastische Bindemittel kann dann beispiels-weise in die Faserstruktur des zweiten Teilelements injiziert werden. Dabei bildet sich eine unregelmäßige Grenzfläche zwischen den beiden flüssigen Bindemitteln aus, sodass die später ausgehärteten Matrixstrukturen mit einer unregelmäßigen Grenzfläche aneinander anliegen und teilweise ineinander eingedrungen sind.

Das Aushärten erfolgt vorzugsweise durch eine entsprechende Temperaturführung, wobei beispielsweise das duroplastische Bindemittel durch eine Temperaturerhöhung - und ggf, durch einen Überdruck - zum Aushärten gebracht wird, während das thermoplastische Bindemittel anschließend beim Abkühlen aushärtet.

In einer anderen Ausführungsform der Erfindung kann, beispielsweise an einem Prepreg, ein Duroplast vorhanden sein, der sich bei einer relativ niedrigen Temperatur (beispielsweise 80°C) verflüssigt und in den Bereich eines angrenzenden Zwischenräume aufweisenden Thermoplast-Prepregs oder Thermoplast-Comminglinghybrids erstreckt. Bei weiterer Temperaturerhöhung verflüssigt sich der Thermoplast, sodass sich In dem Teilbereich des Thermoplasten ein Mischbereich ausbildet, in dem die Thermoplastfasern des Comminglinghybrids oder der Thermoplastanteil des Prepregs innerhalb des eingedrungenen Duroplasten verflüssigt werden und so bei der Aushärtung des Duroplasten thermoplastische Einschlüsse bilden. Wesentlich für die Erhöhung der Verbindungskraft ist dabei jedoch die räumliche Verzahnung der betreffenden Matrizes durch das in den zweiten Teilbereich unregelmäßig eingedrungene duroplastische Material. Der Mischberelch befindet sich ausschließlich im zweiten Teilbereich der Anordnung, wobei "ausschließlich" auch hier bedeutet, dass allenfalls ein geringfügiger Rückfluss an thermoplastischem Material in den ersten Teilbereich des Duroplasten erfolgt, der volumenmäßig weniger als 2 %, vorzugsweise weniger als 1 %, ausmacht.

Vorzugsweise werden die Verfahrensschritte zur Herstellung des Faserverbund-Bauelements bis zum Aushärten der Matrixsysteme in der einmal geschlossenen Form durchgeführt, woraus sich eine erhebliche Rationalisierung des Herstellungsverfahrens ergibt.

In einer anderen Ausführungsform ist das Verfahren der eingangs erwähnten Art dadurch gekennzeichnet, dass das erste Matrixsystem des ersten Teilelements unter Belassung eines zum Anschließen an das zweite Teilelement vorgesehenen Übergangsbereichs mit durch das erste Matrixsystem unbenetzter Faserstruktur konsolidiert wird und dass anschließend das zweite Teilelement nach dem Eindringen des zweiten Matrixsystems des zweiten Teilelements in den Übergangsbereich innerhalb der ersten Faserstruktur des ersten Teilelements konsolidiert wird.

In einer anderen Ausführungsform ist das Verfahren der eingangs erwähnten Art dadurch gekennzeichnet, dass das erste Teilelement unter Belassung eines zum Anschließen an das zweite Teilelement vorgesehenen Übergangsbereiches mit durch das Matrixsystem unbenetzter Faserstruktur konsolidiert wird und das anschließend an das zweite Teilelement nach einem Eindringen des Matrixsystems des zweiten Teilelements in den Übergangsbereich des ersten Teilelementes konsolidiert wird.

Das erste Teilelement bzw. Bauteil einer Baugruppe wird somit separat so konsolidiert, dass ein trockener Faserbereich ohne Matrixmaterial im Übergang zur späteren Baugruppe, d.h. dem zweiten Teilelement verbleibt. Die Konsolidierung beispielsweise durch Matrixverflüssigung oder Matrixinjektion und Aushärtung kann auch vor der Montage mit dem zweiten Teilelement erfolgen. Dadurch wird die spätere Übergangszone von einem Matrixsystem des ersten Teilelementes zum anderen Matrixsystem des zweiten Teileelementes innerhalb des ersten Teilelementes festgelegt.

Das zweite Bauelement wird somit nicht thermisch belastet, wenn die Matrix des ersten Teilelementes verflüssigt wird, da der Übergangsbereich bereits vor der Montage des ersten und zweiten Teilelementes zu einer Baugruppe im ersten Teilelement erzeugt wird.

Das Konsolidieren des ersten und/oder zweiten Teilelementes kann beispielsweise durch Verflüssigen und anschließendem Aushärten des jeweiligen Matrixsystems erfolgen.

Es ist aber auch denkbar, dass das Konsolidieren des ersten und/oder zweiten Teilelementes durch Injektion von Matrixmaterial und anschließendem Aushärten des jeweiligen Matrixsystems erfolgt.

Besonders vorteilhaft ist es, wenn der Übergangsbereich mit einer unregelmäßigen Dickenverteilung über die Fläche des Übergangsbereichs ausgeführt ist. Dies wird erreicht, da die Faserschichten des Übergangsbereiches in ihrer Fläche sowohl über trockene Faserbereiche verfügen, als auch über von Matrixmaterial des ersten Teilelementes durchsetzte Bereiche. Die sich dementsprechend ungleichmäßig durch die Faserschichten des Übergangsbereiches hierdurch ausbildende unregelmäßige Grenzschicht hat den Vorteil, dass eine verbesserte Verhakung und Verzahnung der beiden Teilelemente im Übergangsbereich erreicht wird. Es wird eine stoffschlüssige Verbindung der beiden Matrixbereiche über die Faser hergestellt.

In einer vorteilhaften Ausführungsform wird das erste Teilelement aus mindestens zwei Schichten aufgebaut, die miteinander beispielsweise durch Vernähen verbunden werden. Eine erste Schicht des ersten Teilelementes ist dabei eine mit Matrixsystemen versehene Faserstruktur und eine zweite Schicht eine mit der ersten Schicht verbundene, ohne Matrixsystem versehene und den Übergangsbereich bildende Faserstruktur. Bei der Konsolidierung des Matrixsystems beispielsweise durch Verflüssigung eines Thermoplastmaterials, fließt das Matrixmaterial teilweise in die zweite Schicht des ersten Teilsystems hinein, so dass sich bei der Aushärtung des Matrixmaterials eine Grenzschicht in der zweiten Schicht bildet.

Als erste Schicht dieses zweischichtigen ersten Teilelementes kann beispielsweise ein Thermoplast-Commingling-Hybrid oder ein Thermoplast-Prepeg eingesetzt werden.

Bei einer anderen vorteilhaften Ausführungsform des ersten Teilelementes wird eine aus miteinander vernähten Faserschichten, aus einem Fasergelege oder aus einer Preform-Faserschicht gebildete zweite Schicht auf die erste Schicht zu Herstellung des ersten Teilelementes aufgebracht. Anschließend wird das Matrixsystem des ersten Teilelementes unter Belassung des Übergangsbereiches konsolidiert, indem beispielsweise ein Thermoplast der ersten Schicht verflüssigt wird, so dass dieser in die zweite Schicht hineinfließt. Bei der Aushärtung des Thermoplasts bildet sich dann eine Grenzschicht in der zweiten Schicht des ersten Teilelementes.

Eine andere vorteilhafte Ausführungsform des ersten Teilelementes wird durch Einlegen einer Thermoplastfolie zwischen die erste und zweite Schicht des ersten Teilelementes vor der Konsolidierung des Matrixsystems des ersten Teilelementes und Aushärten des Matrixsystems mittels Wärmeeintrag hergestellt. Beim Wärmeeintrag schmilzt die Thermoplastfolie auf und dringt teilweise in die zweite Schicht zur Bildung eines ungleichförmigen Übergangsbereichs ein.

Die Thermoplastfolie kann beispielsweise gelocht oder perforiert sein.

Die Perforation der Thermoplastfolie bleibt weitestgehend in der zweiten Schicht erhalten und es bildet sich eine Grenzschicht mit Löchern aus. Dadurch kann das Matrixsystem des zweiten Teilelementes in diese Löcher hineinfließen und bei dessen Aushärtung sich mit dem Matrixsystem des ersten Teilelementes zusätzlich verzahnen. Somit erzeugen beide Matrixsysteme eine uneinheitliche Grenzfläche.

Ein mit dem beschriebenen Verfahren hergestelltes Faserverbund-Bauelement kann beispielsweise für Stringer versteifte Rumpf- oder Flügelschalen eines Luftfahrzeuges genutzt werden. Dabei werden die Schalenelemente aus Epoxyd-Kohlefaser-Pregeg gelegt, während die Stringer aus Kohlerfasermaterial mit thermoplastischer Matrix mit dem oben beschriebenen Verfahren hergestellt werden. Die Stringer sind dann bis auf die Kontaktbereiche des Stringerfußes zur Prepegschale fertig konsolidiert und können durch Warmumformung an zum Beispiel sphärische Konturen der Schale fein angepasst werden. Beim Aufheizen des gesiegelten Schalenbauteils mit den Stringern wird der noch trockene Bereich der Stringerfüße mit Überschussharz des Prepegs getränkt und bildet so eine belastbare Anbindung der Stringer an die Schale.

Es ist offensichtlich, dass das Verfahren auch zur Herstellung von Faserverbund-Bauelementen für andere Anwendungsgebiete entsprechend genutzt werden kann.

Die Erfindung wird im Folgenden anhand von in der Zeichnung dargestellten Ausführungsbeispielen näher erläutert. Es zeigen:
- Figur 1: eine benachbarte Anordnung von Faserstrukturen zweier benachbarter Teilelemente eines Faserverbundbauelements
- Figur 2: schematisch die Applikation von Temperatur und Druck auf die Anordnung gemäß Figur 1 zum Erschmelzen eines Thermoplastanteils in der Faserstruktur des ersten Teilelements
- Figur 3: schematisch das Eindringen von thermoplastischem Material des ersten Teilelements in das zweite Teilelement
- Figur 4: schematisch eine anschließende Injektion von duroplastischem Harz
- Figur 5: die Aushärtung des injizierten duroplastischen Harzes
- Figur 6: das ausgehärtete, gemäß dem Verfahren der Figuren 1 bis 5 hergestellte Bauelement
- Figur 7: ein Verfahrensschritt zur Herstellung eines Bauelements nach einer weiteren Ausführungsform der Erfindung unter Ausbildung einer Mischzone
- Figur 8: das ausgehärtete Bauelement
- Figur 9: eine schematische verdeutlichende Darstellung des Bauelements gemäß Figur 8
- Figur 10a) bis f): Skizze des Verfahrens zur Herstellung eines Faserverbund-Bauelementes mit Querschnittsansichten eines das Faserverbund-Bauelement bildenden ersten und zweiten Teilelementes;
- Figur 11: Skizze einer ersten Ausführungsform des ersten Teilelementes als Querschnittsansicht;
- Figur 12a) und b): Skizze der Konsolidierung des Matrixsystems des ersten Teilelementes aus Figur 2;
- Figur 13: Skizze einer zweiten anderen Ausführungsform des ersten Teilelementes als Querschnittsansicht;
- Figur 14a) und b): Skizze der Konsolidierung des Matrixsystems des ersten Teilelementes aus Figur 4;
- Figur 15: Skizze einer dritten Ausführungsform des ersten Teilelementes als Querschnittsansicht;
- Figur 16a) und b): Skizze des Verfahrens zur Konsolidierung des Matrixsystems des ersten Teilelementes aus Figur 6;
- Figur 17a) bis c): Skizze der Herstellung von stringerversteiften Rumpf- oder Flügelschalen.

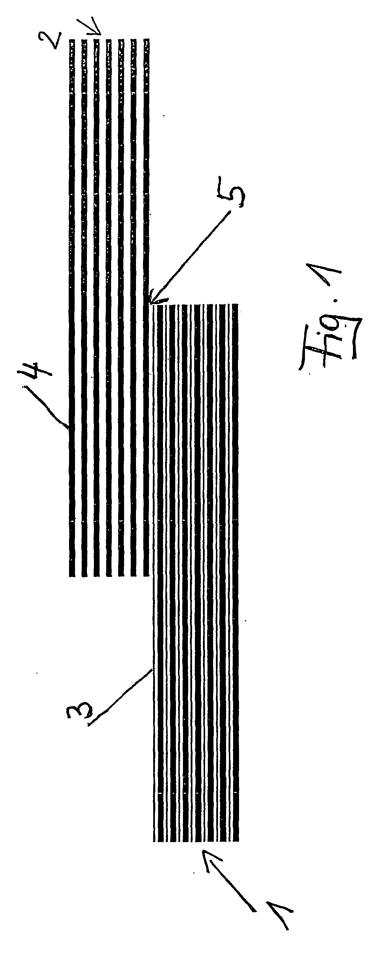

Figur 1 zeigt schematisch ein erstes Teilelement 1 und ein zweites Teilelement 2 eines herzustellenden Faserverbund-Bauelements. Das erste Teilelement 1 weist eine Faserstruktur 3 und das zweite Teilelement 2 eine Faserstruktur 4 auf, die in Form von aufeinander gelegten Gewebelagen schematisch dargestellt sind. Die beiden Teilelemente sind überlappend zueinander angeordnet und bilden somit eine gemeinsame Grenzfläche 5.

In dem dargestellten Ausführungsbeispiel enthält die Faserstruktur 3 des ersten Teilelements 1 Thermoplastfasern (Commingling-Hybrid).

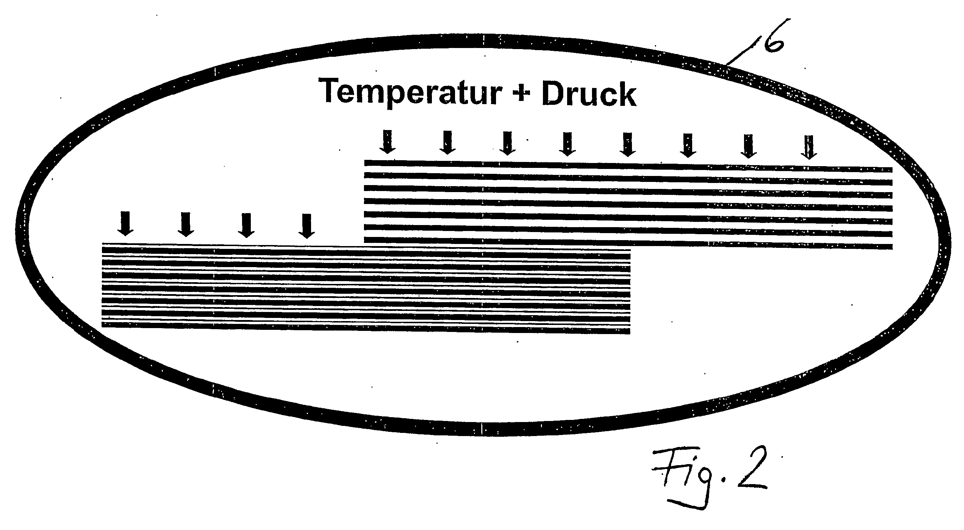

Figur 2 zeigt schematisch durch einen die Anordnung umgebenden Abschluss 6, dass die Anordnung gemäß Figur 1 in eine Form eingelegt und nach außen hin abgeschlossen ist, sodass auf die Anordnung innerhalb der Form 6 eine erhöhte Temperatur und ein modifizierter Druck (erhöhter Druck oder Unterdruck) ausgeübt werden kann.

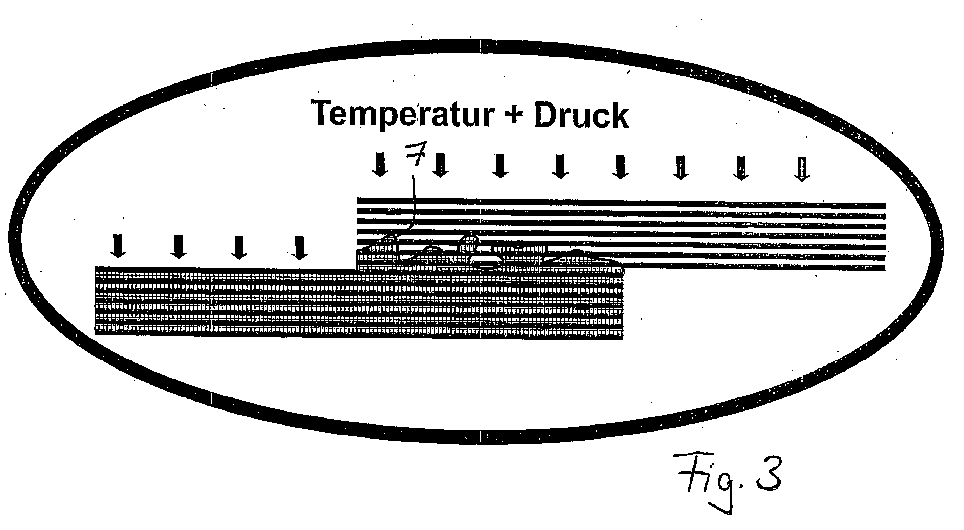

Durch eine erhöhte Temperatur können die Thermoplastfasern in der im Übrigen durch Kohlefasern gebildeten Faserstruktur 3 des ersten Teilelements 1 zum Schmelzen gebracht werden, sodass ein thermoplastisches flüssiges Bindemittel entsteht. Da die Faserstruktur 4 des zweiten Teilelements 2 als trockenes Kohlefaserhalbzeug ausgebildet ist, dringt das Bindemittel durch Kapilarwirkung und ggf. durch eine Überdruckwirkung innerhalb der Form 6 in den Bereich des zweiten Teilelements 2, vorzugsweise in die Faserstruktur 4 des zweiten Teilelements 2, unregelmäßig ein, wie dies in Figur 3 verdeutlicht ist.

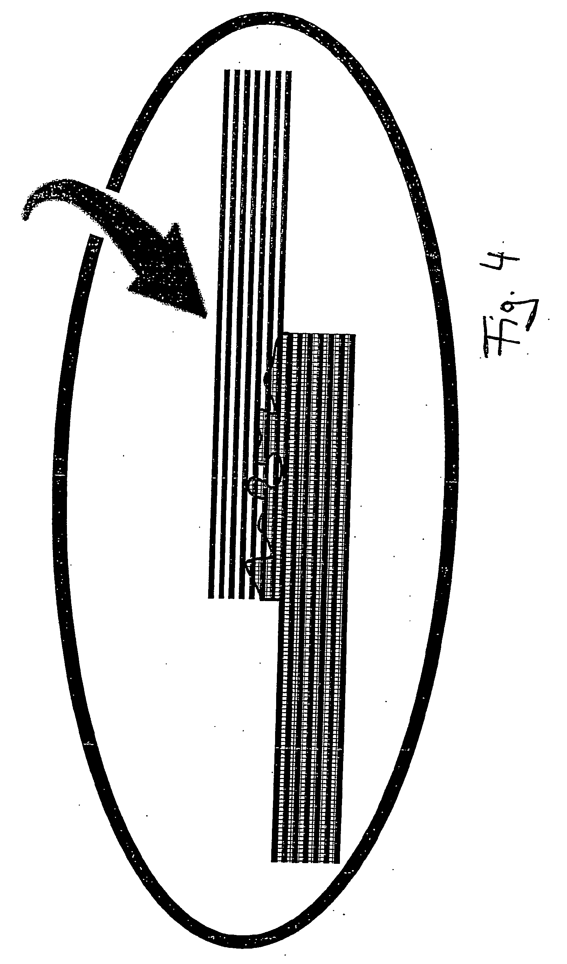

Bei bereits verfestigtem Bindemittel des ersten Teilelements 1 wird gemäß Figur 4 nunmehr ein duroplastisches Bindemittel (beispielsweise Epoxidharz) in die Faserstruktur 4 des zweiten Teilelements 2 eingepresst, wie dies durch einen Pfeil schematisch verdeutlicht ist. Die beiden Bindemittel bilden somit eine unregelmäßige Grenzlinie 7 zueinander, die aufgrund des in die Faserstruktur 4 des zweiten Teilelements 2 eingedrungenen Bindemittels nur im Bereich des zweiten Teilelements 2 verläuft.

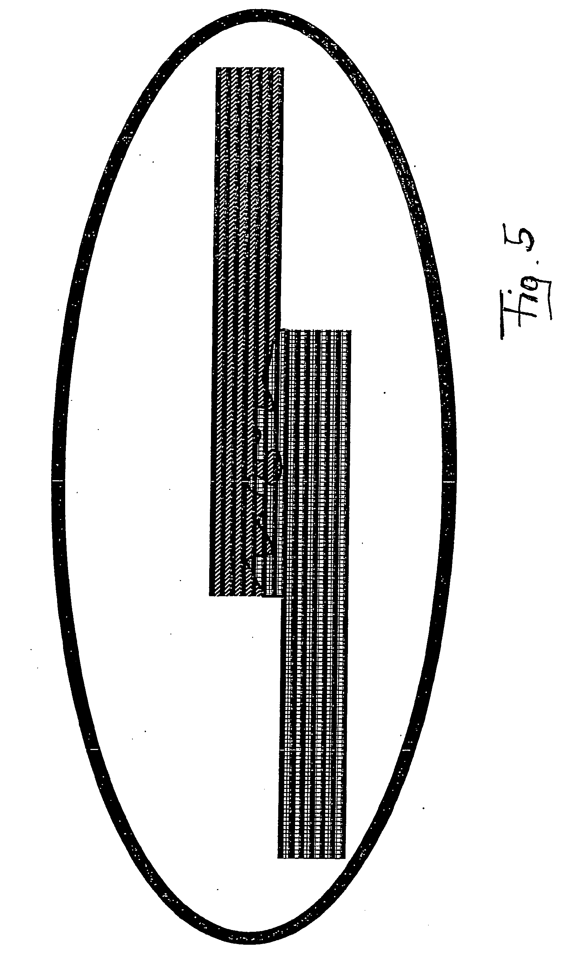

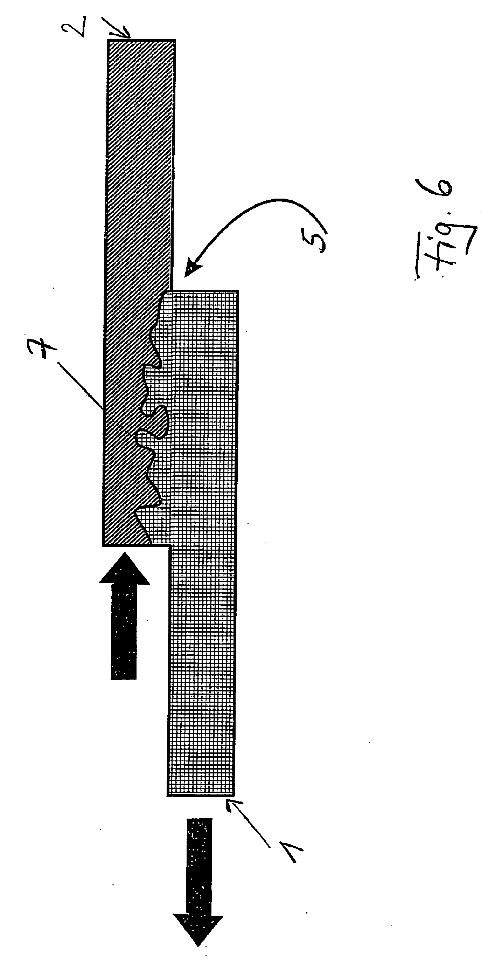

Durch eine weitere Temperaturerhöhung in der Anordnung gemäß Figur 5 wird das injizierte duroplastische Bindemittel ausgehärtet. Durch ein anschließendes Abkühlen der Anordnung, vorzugsweise innerhalb der Form 6, wird auch das thermoplastische Bindemittel des ersten Teilelements 1 ausgehärtet, sodass nach der Entnahme aus der Form 6 ein in Figur 4 dargestelltes Faserverbund-Bauelement vorliegt, das an seiner Grenzfläche 5 miteinander verzahnte Matrixsysteme der beiden Teilelemente 1, 2 aufweist und somit eine hohe Resistenz gegen in Figur 6 durch Pfeile schematisch angedeutete Scherbelastungen aufweist.

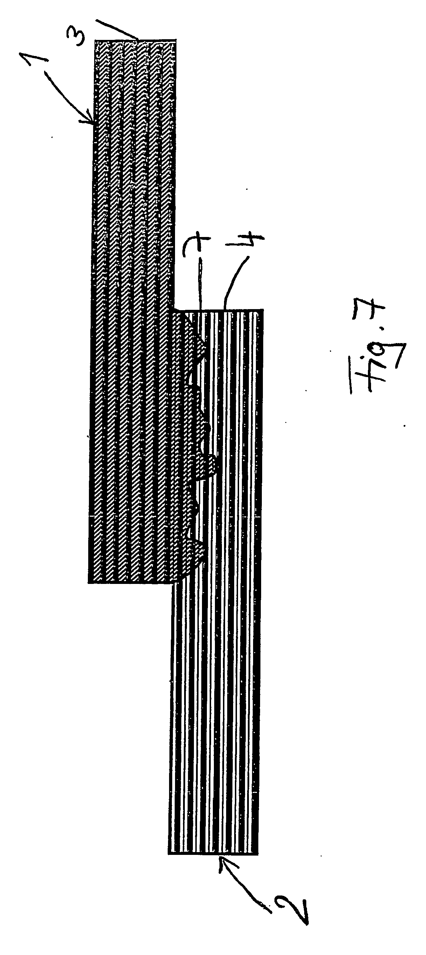

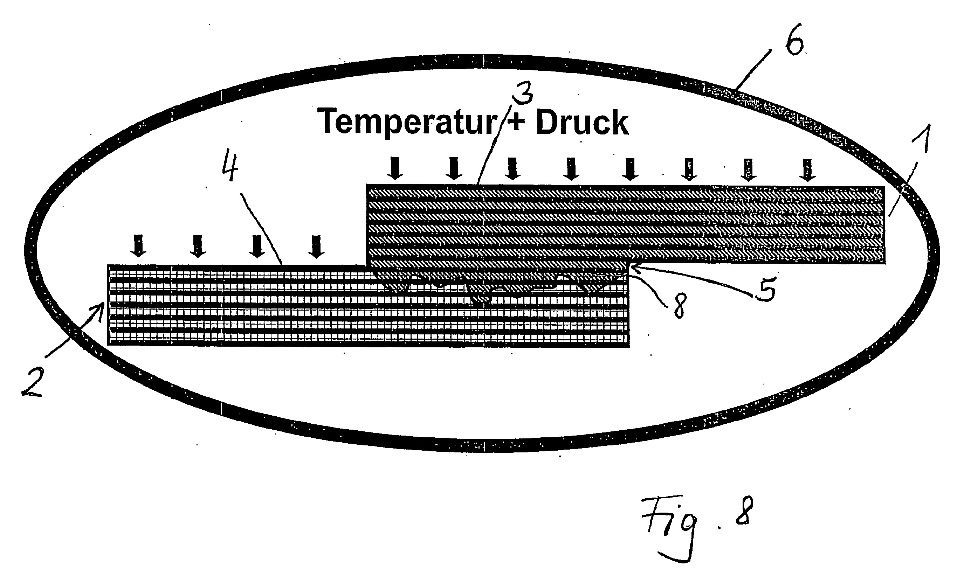

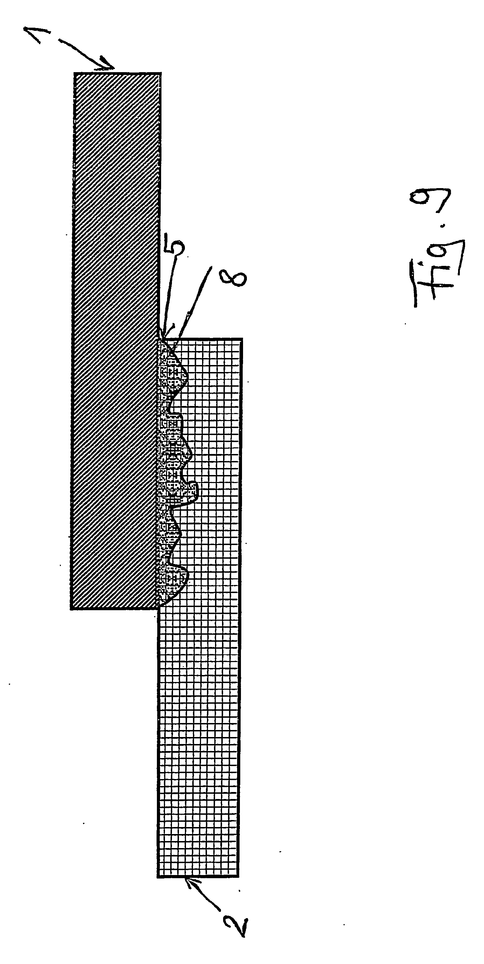

Bei dem in den Figuren 7 bis 9 dargestellten Ausführungsbeispiel weist das erste Teilelement 1 eine Faserstruktur 3 auf, die in Form eines Prepregs mit einem duroplastischen Kunststoff in einem Überschuss beschichtet ist, sodass beim Erhöhen der Temperatur in einer Form oder einem Autoklaven 6 das duroplastische Material in dem Bereich des zweiten Teilelements 2 unregelmäßig eindringt und die unregelmäßige Grenzlinie 7 ausbildet. Die Faserstruktur 4 des zweiten Teilelements kann beispielsweise mit thermoplastischen Fasern als Comminglinghybrid versetzt sein. Bei einer Erhöhung der Temperatur beginnt das duroplastische Material auszuhärten, während die thermoplastischen Fasern anfangen zu schmelzen. Dadurch bildet sich das thermoplastische Verbundmaterial in dem zweiten Teilelement aus. Nach dem Abkühlen und Aushärten des Bauelements hat sich im Bereich des zweiten Teilelements 2 ein unregelmäßiger Mischbereich 8 ausgebildet, der aus ausgehärtetem duroplastischem Material mit ebenfalls ausgehärteten thermoplastischen Einschlüssen besteht. Wiederum wird die Verbesserung der Stabilität der Grenzschicht 5 zwischen den Teilelementen 1, 2 durch die mechanisch unregelmäßig ausgebildete Grenzlinie 7 des Mischbereichs 8 in dem zweiten Teilelement 2 bewirkt.

Es versteht sich, dass die dargestellten Ausführungsbeispiele nicht schutzbeschränkend sein sollen. Im Rahmen der Erfindung können unterschiedliche Bindemittel in benachbarten Teilelementen 1, 2 eingesetzt werden, die beide duroplastisch oder beide thermoplastisch sind. Ferner ist es nicht erforderlich, ein Comminglinghybrid zu verwenden, da in gleicher Weise Prepregs oder trockene Faserstrukturen verwendbar sind, in die das entsprechende Matrixmaterial injiziert wird.

Ferner ist es möglich, das Bindemittel des ersten Teilelements 1 nach der Verflüssigung bereits aushärten zu lassen, bevor das Bindemittel des zweiten Teilelements 2 durch Verflüssigung oder Injektion aktiviert wird. In allen Fällen kann die erfindungsgemäße erwünschte mechanische Verzahnung der Matrixsysteme der beiden Teilelemente 1, 2 in dem zweiten Teilelement 2 realisiert werden.

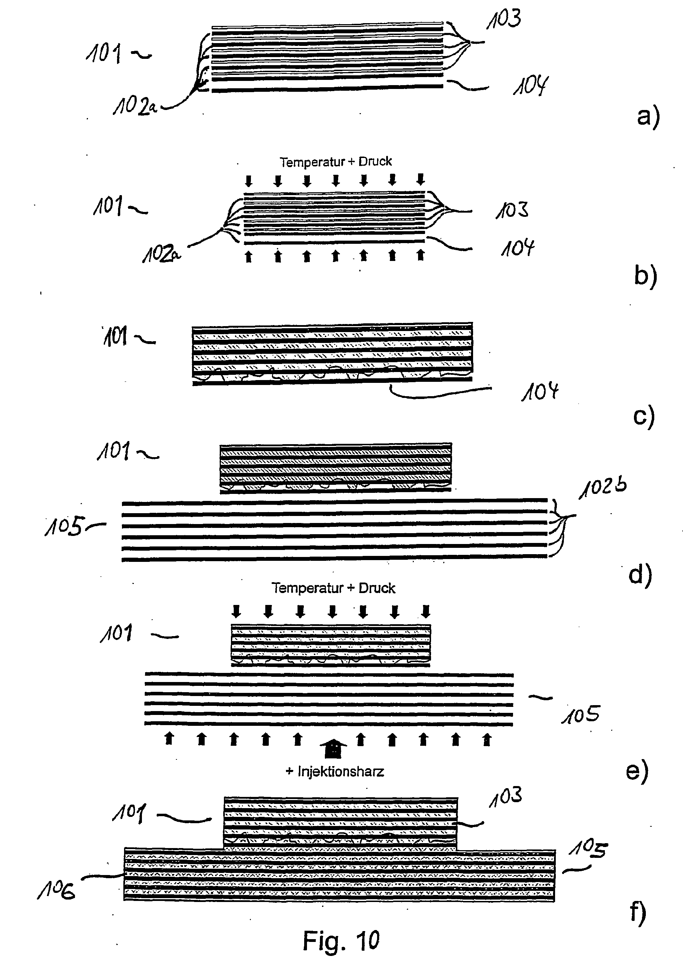

Die Figur 10a) bis f) lässt die verschiedenen Verfahrensschritte zur Herstellung eines Faserverbund-Bauelementes bestehend aus zwei aneinander angrenzenden Teilelementen erkennen.

Die Figur 10a) zeigt eine Querschnittsansicht eines ersten Teilelementes 101 bestehend aus einer Faserstruktur 102 und einem in die Faserstruktur 102 eingebetteten Matrixsystem 103.

Wie in der Figur 10b) erkennbar ist, wird das Matrixsystem 103 des ersten Teilelementes 101 durch Temperatur und Druck verflüssigt, um das erste Teilelement 101 anschließend durch Aushärtung des Matrixmaterials 103 zu konsolidieren. Dadurch, dass die Faserstruktur 102 in einem Übergangsbereich 104 des ersten Teilelementes 101 von Matrixsystem 103 unbenetzt ist, dringt das Matrixsystem 103 bei der Konsolidierung nur unvollständig in den Übergangsbereich 104, d.h. in den matrixfreien Übergangsbereich 104 ein. Nach Aushärtung entsteht dort ein Übergangsbereich 104 mit einer unregelmäßigen Dickenverteilung über die Fläche des Übergangsbereiches 104, wie in der Figur 10c) erkennbar ist.

In einem nächsten Schritt, der in der Figur 10d) skizziert ist, wird das separat konsolidierte erste Teilelement 101 flächig auf ein zweites Teilelement 105 aufgelegt. Anschließend wird ein Matrixsystem (Injektionsharz) 106 in das zweite Teilelement 105 injiziert und durch Temperatur und Druck erreicht, dass das Matrixsystem 106 des zweiten Teilelementes 105 durch dieses in den Übergangsbereich 104 des ersten Teilelementes hineinfließt. Dort verhakt oder verzahnt sich das Matrixsystem 106 mit dem Übergangsbereich und wird ausgehärtet (Figuren 10e) und f)).

Es ist somit vorgesehen, dass das Matrixsystem 103 des ersten Teilelementes 101 verflüssigt wird und aufgrund seiner hohen Viskosität den Übergangsbereich 104 des ersten Teilelementes 101 unvollständig durchdringt, so dass sich eine unregelmäßige Grenzschicht beim Aushärten des Matrixsystems 103 ausbildet. Das Matrixsystem 106 des zweiten Teilelementes 105 ist beim Aushärten des ersten Teilelementes 101 noch nicht anwesend bzw. das Matrixsystem 103 des ersten Teilelementes 101 wird ohne die Anwesenheit des zweiten Teilelementes 105 verflüssigt und ausgehärtet. Anschließend wird das Matrixsystem 106 in das zweite Teilelement 105 injiziert oder ein bereits im zweiten Teilelement 105 enthaltenes Matrixsystem 106 erwärmt. Hierdurch dringt das Matrixsystem 106 des zweiten Teilelementes 105 in den Übergangsbereich 104 des ersten Teilelementes 101 ein, der noch nicht mit einem Matrixsystem 106 benetzt worden ist. Demzufolge fließt das Matrixsystem des zweiten Teilelementes 105 an die Grenzschicht des ersten Matrixsystems 103 heran, verhakt oder verzahnt sich mit diesem und wird ausgehärtet.

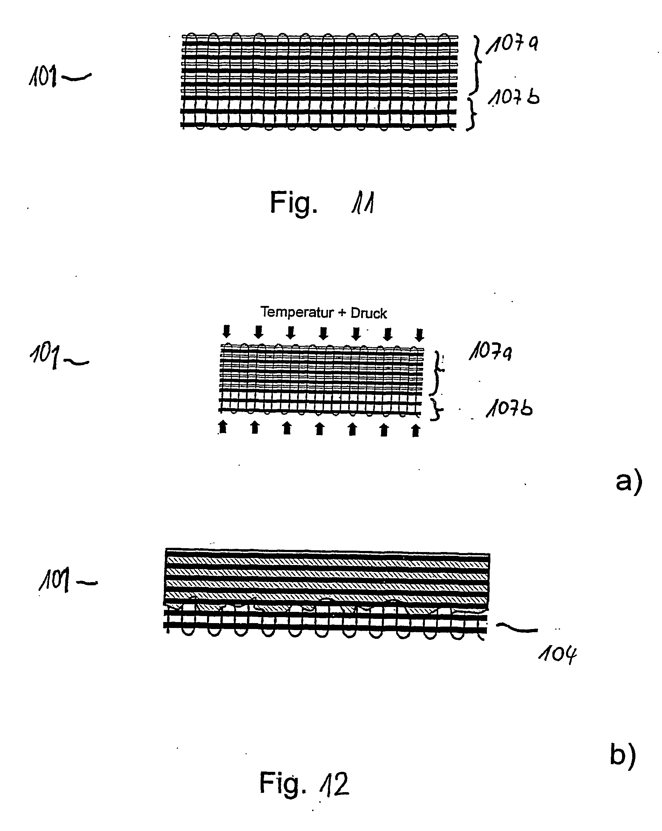

Die Figur 11 lässt eine zweite Ausführungsform des ersten Teilelementes 101 erkennen, das aus zwei Schichten 107a, 107b aufgebaut ist. Die erste Schicht 107a besteht aus Thermoplast-Commingling-Hybrid, das mit der zweiten Schicht 107b verbunden ist. Die zweite Schicht 107b kann aus einer oder mehreren trockenen bzw. ohne Matrixsystem versehenen Faserschichten bestehen. Die Verbindung der ersten und zweiten Schicht 107a, 7b miteinander kann beispielsweise durch Vernähen erfolgen. Bei der Verflüssigung des in der ersten Schicht 107a enthaltenen Thermoplasts fließt dieser teils in die zweite Schicht 107b hinein, so dass sich bei der Aushärtung des Thermoplasten als Matrixsystem eine Grenzschicht in der zweiten Schicht 107b als Übergangsbereich 104 bildet.

Hierzu wird, wie in der Figur 12a) gezeigt ist, das aus den beiden Schichten 107a, 107b gebildete erste Teilelement 101 mit Hilfe von Temperatur und Druck konsolidiert. Die Figur 12b) lässt das fertig konsolidierte erste Teilelement 101 mit dem Übergangsbereich 104 erkennen.

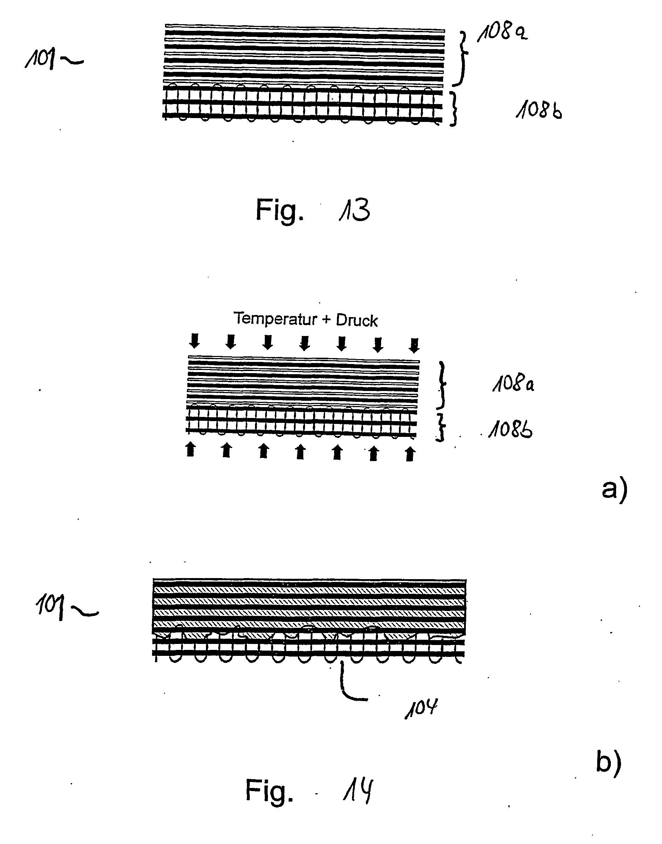

Eine in der Figur 13 skizzierte dritte Ausführungsform des ersten Teilelementes 101 ist ebenfalls aus zwei Schichten 108a, 108b aufgebaut. Wiederum besteht die erste Schicht 108a aus Thermoplast-Commingling-Hybrid oder aus Thermoplast-Prepeg. Die zweite Schicht 108b besteht aus mehreren miteinander vernähten Faserschichten, aus einem Fasergelege oder aus einer Preform-Faserschicht.

Vor dem Aufschmelzen des Thermoplasten in der ersten Schicht 108a wird die zweite Schicht 108b mit der ersten Schicht 108a in Kontakt gebracht. Anschließend wird, wie in der Figur 14a) skizziert ist, der Thermoplast der ersten Schicht 108a durch Temperatur und Druck verflüssigt und beginnt in die zweite Schicht 108b hinein zufließen. Dadurch bildet sich bei der Aushärtung des Thermoplasten eine Grenzschicht in der zweiten Schicht 108b, die wiederum einen Übergangsbereich 104 mit unregelmäßiger Dickenverteilung schafft.

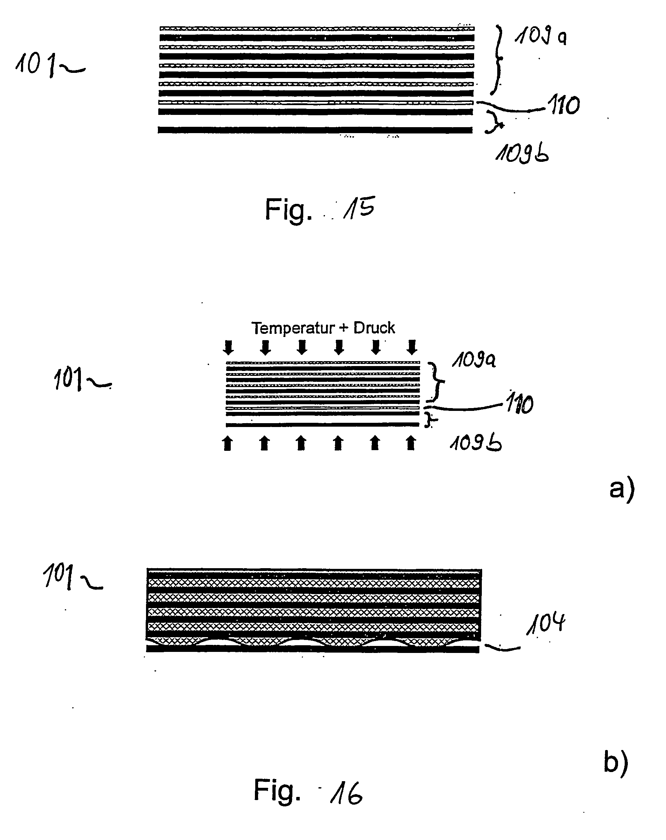

Die Figur 15 lässt eine vierte Ausführungsform des ersten Teilelementes 101 erkennen, bei der vor der Konsolidierung des in einer ersten Schicht 109a enthaltenen Thermoplasten als Matrixsystem zwischen die erste und zweite Schicht 109a, 109b eine gelochte oder perforierte Thermoplastfolie 110 gelegt wird.

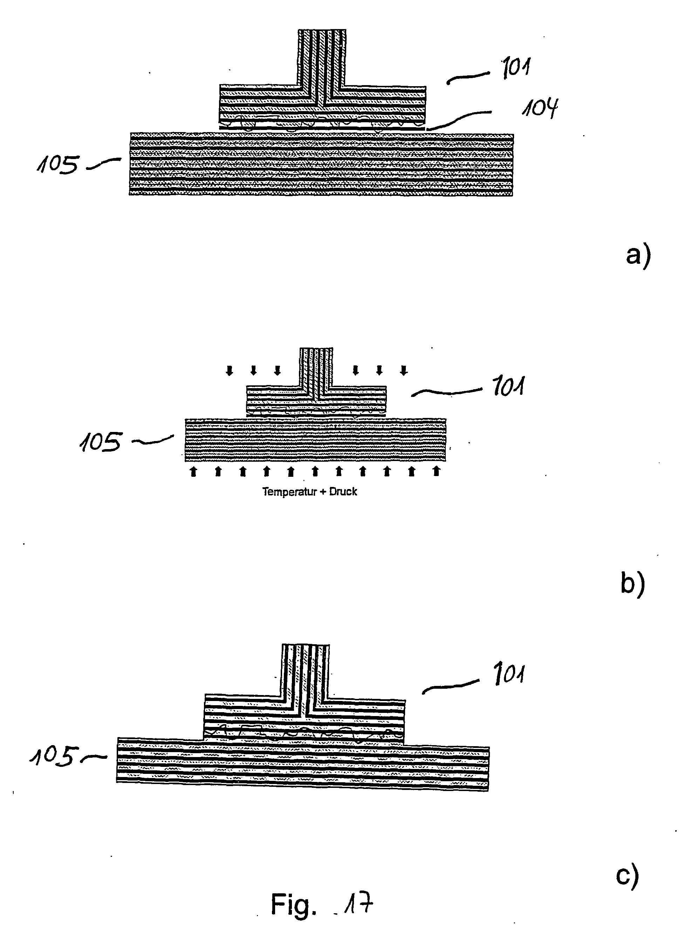

Bei der in der Figur 16a) skizzierten Konsolidierung des ersten Teilelementes 101 durch Temperatur und Druck beginnt die Thermoplastfolie 110 aufzuschmelzen und fließt teilweise in die zweite Schicht 109b hinein. Bei der Aushärtung des ersten Teilelements 101 werden damit beide Schichten 109a, 109b miteinander verbunden. Außerdem bleibt die Perforation der Thermoplastfolie 110 weitestgehend in der zweiten Schicht 109b erhalten und es bildet sich eine Grenzschicht mit Löchern aus. Dies ist in der Figur 17b) skizziert. Dort ist der entsprechende Löcher aufweisende Übergangsbereich 104 zu erkennen. Das Matrixsystem des zweiten Teilelementes 105 kann dann in diese Löcher des Übergangsbereichs 104 hineinfließen und sich bei Aushärtung mit dem Matrixsystem des ersten Teilelementes 101 zusätzlich verzahnen bzw. eine verstärkt uneinheitliche Grenzfläche erzeugen.

Die Figur 17a) bis c) lässt die Anwendung des oben beschriebenen Verfahrens zur Herstellung stringerversteifter Rumpf- oder Flügelschalen für Luftfahrzeuge erkennen. Das erste Teilelement 101 ist beispielsweise ein aus Kohlefasermaterial mit thermoplastischer Matrix hergestellter Stringer, der mit Ausnahme des Übergangsbereiches 104 am Stringerfuß zum Schalenelement als zweites Teilelement 105 fertig konsolidiert ist. Die Stringer können auch durch Warmumformung an zum Beispiel sphärische Konturen der Schale, d.h. des zweiten Teilelementes 105 fein angepasst werden.

Die Schalenelemente, d.h. das zweite Teilelement 105 ist beispielsweise aus Epoxyd-Kohlefaser-Prepeg gelegt. Beim Aufheizen des gesiegelten Schalenbauteils, d.h. des zweiten Teilelements 105, mit den Stringern, d.h. dem ersten Teilelement 101, wird der noch trockene Bereich der Stringerfüße mit Überschussharz des Prepegs getränkt und bildet so eine belastbare Anbindung der Stringer an die Schale. Dies ist in den Figuren 17b) und c) skizziert.

## Patentansprüche

1. Faserverbund-Bauelement mit wenigstens aneinander angrenzenden ersten und zweiten Teilelementen (1, 2) wobei das erste Teilelement (1) aus einer ersten Faserstruktur (3) und einem die erste Faserstruktur (3) einbettenden ersten Matrixsystem und das zweite Teilelement (2) aus einer zweiten Faserstruktur (4) und einem die zweite Faserstruktur (4) einbettenden zweiten Matrixsystem besteht und wobei die beiden Matrixsysteme unterschiedlich aushärten, **dadurch gekennzeichnet, dass** sich das erste Matrixsystem mit unregelmäßigen Grenzflächen in die zweite Faserstruktur (4) des zweiten Teilelements (2) erstreckt und sich das zweite Matrixsystem des zweiten Teilelements (2) mit komplementären Grenzflächen an das erste Matrixsystem des ersten Teilelements (1) innerhalb der zweiten Faserstruktur (4) anschließt.

2. Faserverbund-Bauelement mit wenigstens aneinander angrenzenden ersten und zweiten Teilelementen (1, 2) wobei das erste Teilelement (1) aus einer ersten Faserstruktur (3) und einem die erste Faserstruktur (3) einbettenden ersten Matrixsystem und das zweite Teilelement (2) aus einer zweiten Faserstruktur (4) und einem die zweite Faserstruktur (4) einbettenden zweiten Matrixsystem besteht und wobei die beiden Matrixsysteme unterschiedlich aushärten, **dadurch gekennzeichnet, dass** sich das erste Matrixsystem des ersten Teilelements (1) mit unregelmäßigen Grenzflächen in die zweite Faserstruktur (4) des zweiten Teilelements (2) erstreckt und dort einen Mischbereich (8) mit den unregelmäßigen Grenzflächen bildet und sich das zweite Matrixsystem des zweiten Teilelements (2) innerhalb der zweiten Faserstruktur (4) mit komplementären Grenzflächen an den Mischbereich (8) anschließt.

3. Faserverbund-Bauelement nach Anspruch 1 oder 2, **dadurch gekennzeichnet, dass** die Matrixsysteme der Teilelemente (1, 2) durch einen Thermoplast und durch einen Duroplast gebildet sind.

4. Verfahren zur Herstellung eines Faserverbund-Bauelements mit wenigstens aneinander angrenzenden ersten und zweiten Teilelementen (1, 2), wobei das erste Teilelement (1) aus einer ersten Faserstruktur (3) und einem die erste Faserstruktur (3) einbettenden ersten Matrixsystem und das zweite Teilelement (2) aus einer zweiten Faserstruktur (4) und einem die zweite Faserstruktur (4) einbettenden zweiten Matrixsystem gebildet wird und die beiden Matrixsysteme unterschiedlich aushärten, **dadurch gekennzeichnet, dass** zunächst das erste Matrixsystem des ersten Teilelements (1) verflüssigt wird, während die zweite Faserstruktur (4) noch nicht mit einem Matrixsystem versehen ist oder ein bereits vorhandenes Matrixsystem noch nicht verflüssigt ist, sodass das Matrixsystem des ersten Teilelements (1) in flüssiger Form in den Bereich des zweiten Teilelements (2) unregelmäßig eindringt, dass anschließend das Matrixsystem des zweiten Teilelements (2) verflüssigt wird und dass die Matrixsysteme mit innerhalb der zweiten Faserstruktur (4) aneinander angrenzenden komplementären Grenzflächen ausgehärtet werden.

5. Verfahren nach Anspruch 4, **dadurch gekennzeichnet, dass** als Matrixstrukturen der Teilelemente (1, 2) ein Thermoplast und ein Duroplast verwendet wird.

6. Verfahren nach Anspruch 5, **dadurch gekennzeichnet, dass** die Faserstruktur (4) des zweiten Teilelements (2) ohne Matrixsystem an dem ersten Teilelement (1) anliegt, wenn der Thermoplast durch Erwärmen verflüssigt wird, und dass anschließend der Duroplast in flüssiger Form in das zweite Teilelement (2) injiziert wird.

7. Verfahren nach Anspruch 5 oder 6, **dadurch gekennzeichnet, dass** der Thermoplast in der Faserstruktur (3) des Teilelements (1) enthalten ist.

8. Verfahren nach einem der Ansprüche 4 bis 7, **dadurch gekennzeichnet, dass** die Faserstrukturen (3, 4) der Teilelemente (1, 2) in eine Form (6) eingelegt werden und dass alle Verfahrensschritte bis zum Aushärten der Matrixsysteme in der einmal geschlossenen Form (6) durchgeführt werden.

9. Verfahren nach einem der Ansprüche 4, 5, 7 und 8, **dadurch gekennzeichnet, dass** ein duroplastisches Material des zugehörigen Teilelements bei einer ersten Temperatur in flüssiger Form verwendet wird und in das andere Teilelement (1) eindringt, in dem ein Thermoplast bei höherer Temperatur als der ersten Temperatur verflüssigt wird.

10. Verfahren zur Herstellung eines Faserverbund-Bauelement mit wenigstens aneinander angrenzenden ersten und zweiten Teilelementen (101, 105), wobei das erste Teilelement (101) aus einer ersten Faserstruktur (102) und einem die erste Faserstruktur (102) einbettenden ersten Matrixsystem und das zweite Teilelement (105) aus einer zweiten Faserstruktur (102b) und einem die zweite Faserstruktur (102b) einbettenden zweiten Matrixsystem gebildet wird und die beiden Matrixsysteme unterschiedlich aushärten, **dadurch gekennzeichnet, dass** das erste Matrixsystem (103) des ersten Teilelements (101) unter Belassung eines zum Anschließen an das zweite Teilelement (105) vorgesehenen Übergangsbereichs (104) mit durch das erste Matrixsystem (103) unbenetzter Faserstruktur (102) konsolidiert wird und dass anschließend das zweite Teilelement (105) nach dem Eindringen des zweiten Matrixsystems (106) des zweiten Teilelements (105) in den Übergangsbereich (104) innerhalb der ersten Faserstruktur (102) des ersten Teilelements (101) konsolidiert wird.

11. Verfahren nach Anspruch 10, **dadurch gekennzeichnet, dass** das Konsolidieren des ersten und/oder zweiten Teilelementes (1, 5) durch Verflüssigen und anschließendem Aushärten des jeweiligen Matrixsystems (3, 6) erfolgt.

12. Verfahren nach Anspruch 10, **dadurch gekennzeichnet, dass** das Konsolidieren des ersten und/oder zweiten Teilelementes (1, 5) durch Injektion und anschließendem Aushärten des jeweiligen Matrixsystems (3, 6) erfolgt.

13. Verfahren nach einem der Ansprüche 10 bis 12, **gekennzeichnet durch** Aufbauen des ersten Teilelementes (1) aus mindestens zwei Schichten (7a, 7b oder 8a, 8b oder 9a, 9b), die miteinander verbunden werden, wobei eine erste Schicht (7a, 8a, 9a) eine mit Matrixsystem (3) versehene Faserstruktur (2) und eine zweite Schicht (7b, 8b, 9b) eine mit der ersten Schicht (7a, 8a, 9a) verbundene, ohne Matrixsystem versehene und den Übergangsbereich (4) bildende Faserstruktur (2) ist.

14. Verfahren nach Anspruch 13, **dadurch gekennzeichnet, dass** als erste Schicht (7a, 8a, 9a) ein Thermoplast-Commingling-Hybrid oder ein Thermoplast-Prepreg eingesetzt wird.

15. Verfahren nach Anspruch 13 oder 14, **gekennzeichnet durch** Vernähen von Faserstrukturen (2) mindestens zweier Schichten (7a, 7b; 8a, 8b; 9a, 9b) miteinander.

16. Verfahren nach einem der Ansprüche 13 bis 15, **gekennzeichnet durch** Aufbringen der zweiten Schicht (7b, 8b, 9b), die aus miteinander vernähten Faserschichten (2), aus einem Fasergelege oder aus einer Preform-Faserschicht gebildet ist, auf die erste Schicht (7a, 8a, 9a) und Konsolidieren des Matrixsystems (3) des ersten Teilelementes (1) unter Belassung des Übergangsbereichs (4).

17. Verfahren nach einem der Ansprüche 13 bis 16, **gekennzeichnet durch** Verflüssigen von thermoplastischem Matrixmaterial (3) der ersten Schicht (7a, 8a, 9a) und Aushärtung des bei der Verflüssigung teilweise in die zweite Schicht (7b, 8b, 9b) eingedrungenen Matrixmaterials (3).

18. Verfahren nach Anspruch 13, **gekennzeichnet durch** Einlegen mindestens einer Thermoplastfolie (10) zwischen die erste und zweite Schicht (9a, 9b) des ersten Teilelementes (1) vor der Konsolidierung des Matrixsystems (3) des ersten Teilelementes (1) und Aushärten des Matrixsystems (3) mittels Wärmeeintrag derart, dass die Thermoplastfolie (10) aufschmilzt und teilweise in die zweite Schicht (9b) zur Bildung eines ungleichförmigen Übergangsbereichs (4) eindringt.

19. Verfahren nach Anspruch 18, **dadurch gekennzeichnet, dass** die Thermoplastfolie (10) gelocht oder perforiert ist.

## Claims

1. Fiber composite component comprising at least first and second partial elements (1, 2) bordering one another, wherein the first partial element (1) consists of a first fiber structure (3) and a first matrix system embedding the first fiber structure (3), and the second partial element (2) consists of a second fiber structure (4) and a second matrix system embedding the second fiber structure (4), and wherein the two matrix systems cure differently, **characterized in that** the first matrix system extends with irregular boundary surfaces into the second fiber structure (4) of the second partial element (2) and the second matrix system of the second partial element (2) adjoins the first matrix system of the first partial element (1) within the second fiber structure (4) with complementary boundary surfaces.

2. Fiber composite component comprising at least first and second partial elements (1, 2) bordering one another, wherein the first partial element (1) consists of a first fiber structure (3) and a first matrix system embedding the first fiber structure (3), and the second partial element (2) consists of a second fiber structure (4) and a second matrix system embedding the second fiber structure (4), and wherein the two matrix systems cure differently, **characterized in that** the first matrix system of the first partial element (1) extends with irregular boundary surfaces into the second fiber structure (4) of the second partial element (2) and and forms there a mixing region (8) with the irregular boundary surfaces and the second matrix system of the second partial element (2) adjoins the mixing region (8) within the second fiber (4) with complementary boundary surfaces.

3. Fiber composite component according to Claim 1 or 2, **characterized in that** the matrix systems of the partial elements (1, 2) are formed by a thermoplastic material and by a thermosetting material.

4. Method for the production of a fiber composite component comprising at least first and second partial elements (1, 2) bordering one another, wherein the first partial element (1) is formed from a first fiber structure (3) and a first matrix system embedding the first fiber structure (3), and the second partial element (2) is formed from a second fiber structure (4) and a second matrix system embedding the second fiber structure (4), and the two matrix systems cure differently, **characterized in that** first the first matrix system of the first partial element (1) is liquefied, while the second fiber structure (4) has not yet been provided with a matrix system or a matrix system which is already present has not yet been liquefied, and therefore the matrix system of the first partial element (1) penetrates irregularly in liquid form into the region of the second partial element (2), **in that** subsequently the matrix system of the second partial element (2) is liquefied and **in that** the matrix systems are cured with complementary boundary surfaces bordering one another withtin the second fiber structure (4).

5. Method according to Claim 4, **characterized in that** a thermoplastic material and a thermosetting material are used as matrix structures of the partial elements (1, 2).

6. Method according to Claim 5, **characterized in that** the fiber structure (4) of the second partial element (2) without a matrix system lies against the first partial element (1) when the thermoplastic material is being liquefied by heating, and **in that** subsequently the thermosetting material is injected in liquid form into the second partial element (2).

7. Method according to Claim 5 or 6, **characterized in that** the thermoplastic material is contained in the fiber structure (3) of the partial element (1).

8. Method according to one of Claims 4 to 7, **characterized in that** the fiber structures (3, 4) of the partial elements (1, 2) are placed in a mold (6) and **in that** all the method steps up to the curing of the matrix systems are carried out in the once closed mold (6).

9. Method according to one of Claims 4, 5, 7 and 8, **characterized in that** a thermosetting material of the associated partial element is used in liquid form at a first temperature and penetrates into the other partial element (1), in which a thermoplastic material is liquefied at a higher temperature than the first temperature.

10. Method for the production of a fiber composite component comprising at least first and second partial elements (101, 105) bordering one another, wherein the first partial element (101) is formed from a first fiber structure (102) and a first matrix system embedding the first fiber structure (102), and the second partial element (105) is formed from a second fiber structure (102b) and a second matrix system embedding the second fiber structure (102b), and the two matrix systems cure differently, **characterized in that** the first matrix system (103) of the first partial element (101) is consolidated while leaving a transitional region (104), intended for adjoining to the second partial element (105) with a fiber structure (102) unwetted by the first matrix system (103), and **in that** subsequently the second partial element (105) is consolidated once the second matrix system (106) of the second partial element (105) has penetrated into the transitional region (104) within the first fiber structure (102) of the first partial element (101).

11. Method according to Claim 10, **characterized in that** the consolidating of the first and/or second partial elements (1, 5) is performed by liquefying and subsequent curing of the respective matrix system (3, 6).

12. Method according to Claim 10, **characterized in that** the consolidating of the first and/or second partial elements (1, 5) is performed by injection and subsequent curing of the respective matrix system (3, 6).

13. Method according to one of Claims 10 to 12, **characterized by** making up the first partial element (1) from at least two layers (7a, 7b or 8a, 8b or 9a, 9b), which are joined to one another, a first layer (7a, 8a, 9a) being a fiber structure (2) which is provided with a matrix system (3) and a second layer (7b, 8b, 9b) being a fiber structure (2) which is joined to the first layer(7a, 8a, 9a), is not provided with a matrix system and forms the transitional region (4).

14. Method according to Claim 13, **characterized in that** a thermoplastic commingling hybrid or a thermoplastic prepreg is used as the first layer (7a, 8a, 9a).

15. Method according to Claim 13 or 14, **characterized by** sewing fiber structures (2) of at least two layers (7a, 7b, 8a, 8b, 9a, 9b) to one another.

16. Method according to one of Claims 13 to 15, **characterized by** applying the second layer (7b, 8b, 9b), formed by fiber layers (2) sewn to one another, by a laid fiber fabric or a preform fiber layer, to the first layer (7a, 8a, 9a) and consolidating the matrix system (3) of the first partial element (1) while leaving the transitional region (4).

17. Method according to one of Claims 13 to 16, **characterized by** liquefying thermoplastic matrix material (3) of the first layer (7a, 8a, 9a) and curing the matrix material (3) that has partially penetrated into the second layer (7b, 8b, 9b) during the liquefaction.

18. Method according to Claim 13, **characterized by** laying at least one thermoplastic film (10) between the first and second layers (9a, 9b) of the first partial element (1) before the consolidation of the matrix system (3) of the first partial element (1) and curing of the matrix system (3) by means of introducing heat, in that the thermoplastic film (10) melts and penetrates partially into the second layer (9b) to form an uneven transitional region (4).

19. Method according to Claim 18, **characterized in that** the thermoplastic film (10) is punched or perforated.

## Revendications

1. Élément structurel composite à fibres, comprenant au moins un premier et un second élément partiel (1, 2) mutuellement adjacents, dans lesquels le premier élément partiel (1) est constitué d'une première structure de fibres (3) et d'un premier système de matrice dans lequel est noyée la première structure de fibres (3), et le second élément partiel (2) est constitué d'une seconde structure de fibres (4) et d'un second système de matrice dans lequel est noyée la seconde structure de fibres (4), et dans lesquels les deux systèmes de matrice durcissent de manière différente, **caractérisé en ce que** le premier système de matrice s'étend avec des surfaces limites irrégulières jusque dans la seconde structure de fibres (4) du second élément partiel (2), et le second système de matrice du second élément partiel (2) se raccorde avec des surfaces limites complémentaires au premier système de matrice du premier élément partiel (1) à l'intérieur de la seconde structure de fibres (4).

2. Élément structurel composite à fibres, comprenant au moins un premier et un second élément partiel (1, 2) mutuellement adjacents, dans lesquels le premier élément partiel (1) est constitué d'une première structure de fibres (3) et d'un premier système de matrice dans lequel est noyée la première structure de fibres (3), et le second élément partiel (2) est constitué d'une seconde structure de fibres (4) et d'un second système de matrice dans lequel est noyée la seconde structure de fibres (4), et dans lesquels les deux systèmes de matrice durcissent de manière différente, **caractérisé en ce que** le premier système de matrice du premier élément partiel (1) s'étend avec des surfaces limites irrégulières jusque dans la seconde structure de fibres (4) du second élément partiel (2) et forme à cet endroit une zone mixte (8) avec les surfaces limites irrégulières, et **en ce que** le second système de matrice du second élément partiel (2) se raccorde avec des surfaces limites complémentaires à la zone mixte (8) à l'intérieur de la seconde structure de fibres (4).

3. Élément structurel composite à fibres selon la revendication 1 ou 2, **caractérisé en ce que** les systèmes de matrice des éléments partiels (1, 2) sont formés par une matière thermoplastique et par une matière thermodurcissable.

4. Procédé pour la fabrication d'un élément structurel composite à fibres comprenant au moins un premier et un second élément partiel (1, 2) mutuellement adjacents, dans lesquels le premier élément partiel (1) est constitué d'une première structure de fibres (3) et d'un premier système de matrice dans lequel est noyée la première structure de fibres (3), et le second élément partiel (2) est constitué d'une seconde structure de fibres (4) et d'un second système de matrice dans lequel est noyée la seconde structure de fibres (4), et les deux systèmes de matrice durcissent de manière différente, **caractérisé en ce que** l'on liquéfie tout d'abord le premier système de matrice du premier élément partiel (1), alors que la seconde structure de fibres (4) n'est pas encore dotée d'un système de matrice ou bien qu'un système de matrice déjà présent n'est pas encore liquéfié, de sorte que le système de matrice du premier élément partiel (1) sous forme liquide pénètre irrégulièrement dans la région du second élément partiel (2), **en ce que** l'on liquéfie ensuite le système de matrice du second élément partiel (2), et en ce les systèmes de matrice sont durcis avec des surfaces limites complémentaires mutuellement adjacentes à l'intérieur de la seconde structure de fibres (4).

5. Procédé selon la revendication 4, **caractérisé en ce que** l'on utilise à titre de structure de matrice des éléments partiels (1, 2) une matière thermoplastique et une matière thermodurcissable.

6. Procédé selon la revendication 5, **caractérisé en ce que** la structure de fibres (4) du second élément partiel (2) sans système de matrice est appliquée contre le premier élément partiel (1) quand la matière thermoplastique est liquéfiée par échauffement, et **en ce que** l'on injecte ensuite la matière thermodurcissable sous forme liquide dans le second élément partiel (2).

7. Procédé selon la revendication 5 ou 6, **caractérisé en ce que** la matière thermoplastique est contenue dans la structure de fibres (3) de l'élément partiel (1).

8. Procédé selon l'une des revendications 4 à 7, **caractérisé en ce que** les structures de fibres (3, 4) des éléments partiels (1, 2) sont posées dans un moule (6), et **en ce que** toutes les étapes du procédé jusqu'au durcissement des systèmes de matrice sont exécutées dans le moule (6) une fois fermé.

9. Procédé selon l'une des revendications 4, 5, 7 et 8, **caractérisé en ce qu'**une matière thermodurcissable de l'élément partiel associé est utilisée à une première température sous forme liquide, et pénètre dans l'autre élément partiel (1) dans laquelle une matière thermoplastique est liquéfiée à une température plus élevée que la première température.

10. Procédé pour la fabrication d'un élément structurel composite à fibres comprenant un premier et un second élément partiel (101, 105) au moins mutuellement adjacents, dans lesquels le premier élément partiel (101) est constitué d'une première structure de fibres (102) et d'un premier système de matrice dans lequel est noyée la première structure de fibres (102), et le second élément partiel (105) est constitué d'une seconde structure de fibres (102b) et d'un second système de matrice dans lequel est noyée la seconde structure de fibres (102b), et les deux systèmes de matrice durcissent de manière différente, **caractérisé en ce que** le premier système de matrice (103) du premier élément partiel (101) est consolidé avec la structure de fibres (102) qui n'est pas mouillée par le premier système de matrice (103) en laissant une zone de transition prévue pour le raccordement au second élément partiel (105), et **en ce que** le second élément partiel (105) est ensuite consolidé après pénétration du second système de matrice (106) du second élément partiel (105) dans la zone de transition (104) à l'intérieur de la première structure de fibres (102) du premier élément partiel (101).

11. Procédé selon la revendication 10, caractériser en ce que la consolidation du premier et/ou du second élément partiel (1, 5) a lieu par liquéfaction et durcissement successif du système de matrice respectif (3, 6).

12. Procédé selon la revendication 10, **caractérisé en ce que** la consolidation du premier et/ou du second élément partiel (1, 5) a lieu par injection et durcissement successif du système de matrice respectif (3, 6).

13. Procédé selon l'une des revendications 10 à 12, **caractérisé par** une structuration du premier élément partiel (1) en au moins deux couches (7a, 7b ou 8a, 8b ou 9a, 9b) qui sont reliées l'une à l'autre, dans lesquelles une première couche (7a, 8a, 9a) est une structure de fibres (2) pourvue d'un système de matrice (3), et une seconde couche (7b, 8b, 9b) est une structure de fibres (2) reliée à la première couche (7a, 8a, 9a), dépourvue de système de matrice et formant la zone de transition (4).

14. Procédé selon la revendication 13, **caractérisé en ce que** l'on emploie comme première couche (7a, 8a, 9a) un hybride thermoplastique-"comélangé" ou un thermoplastique préimprégné.

15. Procédé selon la revendication 13 ou 14, **caractérisé en ce que** l'on coud des structures de fibres (2) d'au moins deux couches (7a, 7b ; 8a, 8b ; 9a, 9b) les unes avec les autres.

16. Procédé selon l'une des revendications 13 à 15, **caractérisé en ce que** l'on applique la seconde couche (7b, 8b, 9b), qui est formée de couches de fibres (2) cousues les unes aux autres, d'un stratifil, ou d'une couche de fibres préformée, sur la première couche (7a, 8a, 9a), et **en ce que** l'on consolide le système de matrice (3) du premier élément partiel (1) en laissant la zone de transition (4).

17. Procédé selon l'une des revendications 13 à 16, **caractérisé en ce qu'**on liquéfie la matière de matrice thermoplastique (3) de la première couche (7a, 8a, 9a), et **en ce que** l'on durcit la matière de matrice (3) qui, lors de la liquéfaction, a partiellement pénétré dans la seconde couche (7b, 8b, 9b).

18. Procédé selon la revendication 13, **caractérisé en ce que** l'on pose au moins une feuille (10) de matière thermoplastique entre la première et la seconde couche (9a, 9b) du premier élément partiel (1) avant la consolidation du système de matrice (3) du premier élément partiel (1) et **en ce que** l'on fait durcir le système de matrice (3) par apport de chaleur de telle façon que la feuille de matière thermoplastique (10) fond et pénètre partiellement dans la seconde couche (9b) pour former une zone de transition (4) de forme inégale.

19. Procédé selon la revendication 18, **caractérisé en ce que** la feuille de matière thermoplastique (10) est trouée ou perforée.
